# EUROPEAN PATENT APPLICATION

(11) **EP 4 425 761 A2**
(43) Date of publication of application: **04.09.2024**
(21) Application number: 24159843.2
(22) Date of filing: 27.02.2024
(51) Int. Cl.: H02K 5/20, H02K 9/19

(54) **MOTOR AND POWERTRAIN**

(30) Priority: 28.02.2023 CN 202310228659
(71) Applicant: Huawei Digital Power Technologies Co., Ltd., Shenzhen, 518043 (CN)
(72) Inventor: WANG, Sixue, Shenzhen, 518043 (CN); LIU, Hongbing, Shenzhen, 518043 (CN); GUO, Qiqi, Shenzhen, 518043 (CN); WEI, Jingzhou, Shenzhen, 518043 (CN)
(74) Representative: Epping - Hermann - Fischer

(57) **Abstract**

This application provides a motor and a powertrain. The motor includes a stator, an end cover, and a housing. The housing may be configured to install the stator and the end cover, and the stator and the end cover are adjacently arranged along an axial direction of the motor. The end cover includes an outer circumferential surface, a side surface, and an internal channel. The outer circumferential surface includes at least one liquid inlet, and the at least one liquid inlet is configured to receive coolant through the housing. The side surface faces the stator, and the side surface includes a plurality of liquid outlets. The internal channel may be configured to connect the one or more liquid inlets and the plurality of liquid outlets. In the motor provided in this application, the coolant can enter the end cover through the at least one liquid inlet, and be sprayed to the stator through the plurality of liquid outlets, to cool the stator.

## Description

### TECHNICAL FIELD

This application relates to the field of vehicle technologies, and in particular, to a motor and a powertrain.

### BACKGROUND

A coolant flow channel in a motor or a powertrain in an existing electric vehicle usually includes a coolant flow channel formed between a stator core and a housing, and a coolant flow channel disposed in the stator core. With miniaturization of the motor and improvement of motor power, a higher requirement is correspondingly imposed on heat dissipation efficiency and a heat dissipation capability of the motor. Therefore, how to further improve cooling effect of the motor or the powertrain has become a difficult problem to be urgently resolved by persons skilled in the art.

### SUMMARY

This application provides a motor and a powertrain. A coolant channel is disposed in an end cover. This reduces space occupied by the coolant channel, and also improves heat dissipation effect of the motor and the powertrain.

According to a first aspect, this application provides a motor. The motor includes a stator, an end cover, and a housing. The housing may be configured to install the stator and the end cover. The stator and the end cover may be adjacently arranged along an axial direction of the motor, and the end cover may include an outer circumferential surface, a side surface, and an internal channel. The outer circumferential surface includes at least one liquid inlet, and the at least one liquid inlet is configured to receive coolant through the housing. The side surface faces the stator, and the side surface includes a plurality of liquid outlets. The internal channel is configured to connect the at least one liquid inlet and the plurality of liquid outlets. In this way, coolant oil entering the end cover through the liquid inlet may be sprayed to the stator through the liquid outlet, and heat dissipation efficiency of the stator can be improved. In addition, in the motor, a cooling structure formed by the end cover and the housing is stable, and occupies small space, to reduce interference between the cooling structure and another structure in the housing. In this way, the liquid outlet is disposed based on a cooling requirement of the motor, to effectively dissipate heat for the motor and improve operating performance of the motor.

In this application, the internal channel includes a radial channel and an axial channel. The radial channel is configured to connect the liquid inlet, the axial channel is configured to connect the liquid outlet, and the radial channel is connected to the axial channel. In this way, the liquid inlet and the liquid outlet may be connected through conversion of channels in two directions: a radial direction and an axial direction. This can help reduce a size of the end cover, and can reduce external pipelines of the end cover. Therefore, a processing process of the end cover is easy to control, and production efficiency of the end cover is improved.

In a possible implementation of this application, a width of the radial channel along the axial direction of the motor is greater than that of the axial channel along a radial direction of the motor, and a pressure of the coolant oil flowing in the internal channel of the end cover may be increased by changing cavity widths of the radial channel and the axial channel. This helps improve a speed at which the coolant oil is sprayed out from the liquid outlet, and further improves cooling efficiency of the stator.

It may be understood that the axial channel may pass through the side surface of the end cover along the axial direction of the motor, the stator may include a stator core and a stator winding, and the stator winding is wound around the stator core. In addition, a projection of the radial channel or the liquid outlet along the axial direction of the motor may fall within a range of a projection of the stator winding along the axial direction of the motor, so that the coolant oil sprayed out from the liquid outlet may be sprayed to an end surface of the stator winding along the axial direction of the motor, to cool the stator winding.

In a possible implementation of this application, the internal channel includes at least one radial channel, an annular channel, and a plurality of axial channels, and the at least one radial channel is connected to the plurality of axial channels through the annular channel. In this way, effect of one-to-many connection is achieved, to reduce pipe arrangement in the end cover, and further simplify the structure of the end cover.

In addition, a width of an annular pipe along the axial direction of the motor is greater than that of the radial channel along the radial direction of the motor, and a width of the annular pipe along the radial direction of the motor is greater than that of the axial channel along the radial direction of the motor, so that the pressure of the coolant oil flowing in the internal channel of the end cover is increased by changing the cavity widths of the radial channel, the annular channel, and the axial channel. This helps improve a speed at which the coolant oil is sprayed out from the liquid outlet, and further improves cooling efficiency of the stator.

In a possible implementation of this application, the liquid outlet may further include an annular protrusion. The annular protrusion is disposed towards the stator, and an inner diameter of the annular protrusion is less than that of the axial channel, so that a size difference between the inner diameter of the axial channel and the inner diameter of the annular protrusion increases a pressure for the coolant oil to enter the annular protrusion through the axial channel. This helps improve a speed at which the coolant oil is sprayed out from the liquid outlet, and further improves cooling efficiency of the stator.

The stator usually includes the stator core and the stator winding. In addition, along the radial direction of the motor, a spacing between the annular protrusion and an axis of the motor is less than that between an outer circumferential surface of the stator winding and the axis of the motor, so that the coolant oil can be sprayed to the end surface of the stator winding through the annular protrusion, to cool the end surface of the stator winding.

In this application, the side surface that is of the end cover and that faces the stator may further include an annular extension part, a radius of an outer circumferential surface of the annular extension part is less than or equal to an inner diameter of the housing, and a radius of an inner circumferential surface of the annular extension part is greater than that of an outer circumferential surface of the stator winding along the radial direction of the motor. Alternatively, it may be understood that a projection of the radial channel or the inner circumferential surface of the annular extension part along the axial direction of the motor surrounds a projection of the stator winding along the axial direction of the motor, and a distance between an end surface of the annular extension part and the other side surface of the end cover is greater than that between a side that is of the stator and that faces the end cover and the other side surface of the end cover.

In addition, the inner circumferential surface of the annular extension part includes the liquid outlet, and the liquid outlet is connected to the axial channel along the radial direction of the motor, so that the coolant oil can be sprayed to the stator along the radial direction of the motor through the liquid outlet. In this implementation, an inner diameter of the liquid outlet along the axial direction of the motor is less than that of the axial channel along the radial direction of the motor. Therefore, the pressure of the coolant oil flowing in the internal channel of the end cover may be increased by changing cavity widths of the axial channel and the liquid outlet. This helps improve a speed at which the coolant oil is sprayed out from the liquid outlet, and further improves cooling efficiency of the stator.

In a possible implementation of this application, a distance between the liquid outlet and the other side surface of the end cover may be greater than that between the side that is of the stator and that faces the end cover and the other side surface of the end cover, and may increase a coverage area that is of the coolant oil sprayed out from the liquid outlet and that is for an end of the stator. This can effectively improve cooling effect of the stator winding.

In this application, a gap may be included between the inner circumferential surface and the outer circumferential surface of the annular extension part, and the gap may be an annular gap. Based on this, the annular gap may be used as an annular channel, and the radial channel may be connected to the axial channel through the annular channel, so that conversion between the radial channel and the axial channel may be implemented through the annular channel. This can help reduce a size of the end cover, and can reduce external pipelines of the end cover.

In a possible implementation of this application, when the end cover is specifically disposed, the end cover may include a first end plate and a second end plate. Along the axial direction of the motor, the first end plate is away from the second end plate, and the first end plate is closer to the stator than the second end plate. In addition, an annular gap is included between the first end plate and the second end plate, the annular gap may be used as an annular channel, and the radial channel may be connected to the axial channel through the annular channel, so that conversion between the radial channel and the axial channel may be implemented through the annular channel. This can help reduce a size of the end cover, and can reduce external pipelines of the end cover, to simplify the structure of the end cover. Based on the structure of the end cover, in a possible implementation of this application, the axial channel may pass through the first end plate along the axial direction of the motor, so that the coolant oil can be sprayed to the stator along the axial direction of the motor through the axial channel.

In another possible implementation of this application, the first end plate includes a groove recessed towards the second end plate, an inner circumferential surface of the groove includes a plurality of bosses, and each boss faces an axis of the motor. In addition, the boss includes a cavity, and the cavity may be used as an axial channel of the internal channel of the end cover. In this way, a distance between the first end plate and the second end plate of the end cover is small, to reduce a thickness of the end cover, and also a volume of the internal channel of the end cover is small, to help increase the pressure of the coolant oil flowing in the internal channel of the end cover. This can improve a speed at which the coolant oil is sprayed out from the liquid outlet, and further improves cooling efficiency of the stator. When the housing is specifically disposed, the housing includes a bottom wall and a peripheral side wall, and the bottom wall is disposed towards the stator. The bottom wall may be used as the second end plate of the end cover, to simplify the structure of the end cover. In addition, the peripheral side wall is disposed around the bottom wall, and a liquid injection opening is disposed on the peripheral side wall. The liquid injection opening passes through the peripheral side wall along a radial direction of the motor, and the liquid injection opening is configured to transmit coolant to the liquid inlet. In this application, the end cover and the housing may be fastened and connected. A manner of fastening and connection between the end cover and the housing is not specifically limited in this application. For example, the end cover may be in an interference fit with an inner circumferential surface of the peripheral side wall, so that the end cover is fastened to the housing in an interference fit mode.

According to a second aspect, this application further provides a powertrain. The powertrain includes a transmission and the motor according to the first aspect, the motor is connected to the transmission by using a transmission shaft, and the transmission is configured to adjust a rotation speed output by the motor. A cooling structure of the stator of the motor in the powertrain is simple and reliable, and the stator can be effectively cooled. This can improve heat dissipation effect of the motor. Therefore, the powertrain has a low cost, and good heat dissipation effect, which is conducive to prolonging a service life of the powertrain.

### BRIEF DESCRIPTION OF DRAWINGS

FIG. 1 is a schematic diagram of a structure of an electric vehicle according to an embodiment of this application;
FIG. 2 is a schematic diagram of a structure of a motor according to an embodiment of this application;
FIG. 3 is a sectional view of a motor according to an embodiment of this application;
FIG. 4 is a schematic diagram of a partial structure of a motor according to an embodiment of this application;
FIG. 5 is a schematic diagram of a structure of a side of a first end plate of an end cover according to an embodiment of this application;
FIG. 6 is a schematic diagram of a structure of a side that is of a first end plate of an end cover and that is away from a stator according to an embodiment of this application;
FIG. 7 is a sectional view of another motor according to an embodiment of this application;
FIG. 8 is a schematic diagram of a structure of a side that is of an end cover of the motor shown in FIG. 7 and that faces a stator;
FIG. 9 is a schematic diagram of a structure of a side that is of the end cover of the motor shown in FIG. 8 and that is away from the stator;
FIG. 10 is a sectional view of another motor according to an embodiment of this application;
FIG. 11 is a schematic diagram of a structure of a side that is of an end cover of the motor shown in FIG. 10 and that faces a bottom wall;
FIG. 12 is a schematic diagram of a structure of a side that is of the end cover shown in FIG. 11 and that faces a stator;
FIG. 13 is a sectional view of another motor according to an embodiment of this application;
FIG. 14 is a schematic diagram of a structure of a side that is of an end cover of the motor shown in FIG. 13 and that faces a stator; and
FIG. 15 is a schematic diagram of a structure of a side that is of the end cover shown in FIG. 14 and that is away from the stator.

Reference numerals:
10: frame; 20: vehicle wheel; 30: transmission mechanism; 40: motor;
1: housing; 101: liquid injection opening; 102: mounting groove; 1021: bottom wall; 1022: peripheral side wall; 104: first shaft hole;
2: stator; 201: stator core; 202: stator winding; 3: rotor; 4: end cover; 4a: first end plate; 401: outer circumferential surface;
4021: first side surface; 4022: second side surface; 403: internal channel; 4031: annular channel; 4032: radial channel;
4033: axial channel; 404: liquid inlet; 405: liquid outlet; 406: second shaft hole; 407: annular extension part;
408: groove; and 4081: boss.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. As used in the specification and appended claims of the application, singular expressions "one", "a", "the", "the foregoing", "this", and "the one" are also intended to include expressions such as "one or more", unless the contrary is clearly indicated in its context.

Reference to "an embodiment", "a specific embodiment", or the like described in this specification indicates that one or more embodiments of this application include a specific feature, structure, or characteristic described with reference to the embodiments. The terms "comprise", "include", "have", and other variants thereof all mean "include but is not limited to", unless otherwise specifically emphasized in another manner.

To facilitate understanding of the motor and the powertrain provided in embodiments of this application, the following first describes an application scenario of the motor and the powertrain.

Currently, vehicles are used in more and more scenarios in production and life, and in particular, the use of electric vehicles is gradually increasing. As a power component of the electric vehicle, a motor plays an important role in performance of the electric vehicle. In a process of working, the motor generates a large amount of heat, and an important measure to make the motor work stably and have a long service life is to keep effective heat dissipation. To resolve problems occurring when a water cooling heat dissipation technology is used, such as poor heat dissipation effect and a high requirement for structural precision, currently, some motors gradually use oil cooling heat dissipation to replace water cooling heat dissipation. However, in an existing motor that uses oil cooling heat dissipation as a cooling solution, installation of a spray pipe used to spray coolant oil is limited by housing space of the motor and a disposed location of another structure. As a result, the spray pipe cannot be disposed in an entire circumferential direction, and spray cooling for the stator in an entire circumferential direction cannot be implemented, and heat dissipation effect of the motor is not ideal.

To resolve the foregoing problems, this application provides a motor and a powertrain, to effectively dissipate heat for a stator of the motor, and improve heat dissipation effect of the motor.

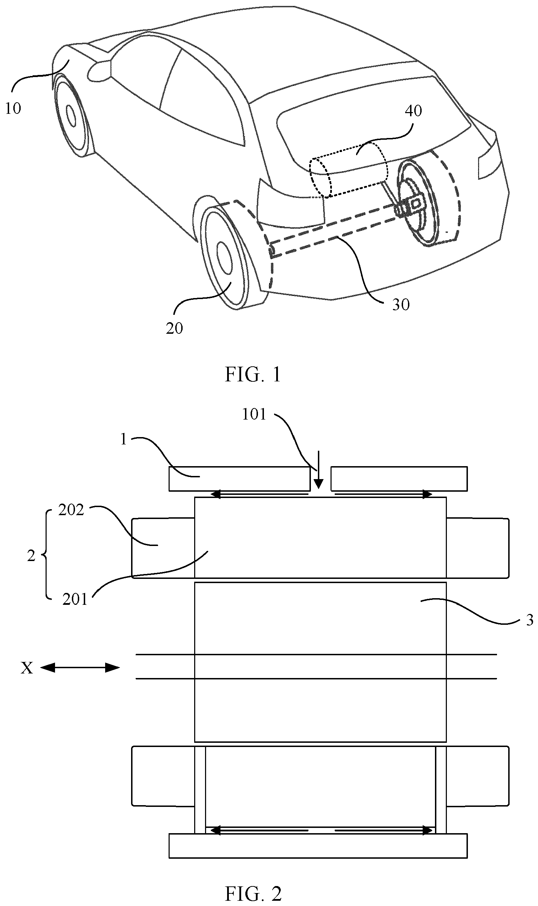

FIG. 1 is a schematic diagram of a structure of an electric vehicle according to this application. For example, the electric vehicle provided in this application includes a frame 10, a vehicle wheel 20, a transmission mechanism 30, and a motor 40. The vehicle wheel 20, the transmission mechanism 30, and the motor 40 are installed on the frame 10. The motor 40 is connected to the vehicle wheel 20 by using the transmission mechanism 30. The motor 40 is configured to convert electric energy into mechanical energy. The transmission mechanism 30 is configured to transmittingly connect the motor 40 and the vehicle wheel 20, and transmit the mechanical energy output by the motor 40 to the vehicle wheel 20 of the electric vehicle.

This application provides a powertrain. The electric vehicle shown in FIG. 1 may include the powertrain provided in this application. The powertrain is configured to drive the vehicle wheel 20 of the electric vehicle. The powertrain includes the transmission mechanism 30 and the motor 40. An output shaft of the motor 40 is in a transmission connection to an input shaft of the transmission mechanism 30. In embodiments of this application, the transmission mechanism 30 includes a gearbox or a speed reducer. For example, an input shaft of the gearbox or the speed reducer is in a transmission connection to the output shaft of the motor 40, and an output shaft of the gearbox or the speed reducer is configured to drive the vehicle wheel 20. The powertrain may adjust a transmission ratio of the transmission mechanism 30 or a rotation speed and torque of the motor 40 based on a driving working condition of the electric vehicle, to adjust driving force output by the powertrain to the vehicle wheel 20.

This application provides a motor. FIG. 2 is a schematic diagram of a structure of a motor according to an embodiment of this application. The motor in this embodiment of this application includes a housing 1, a stator 2, and a rotor 3. The stator 2 and the rotor 3 are coaxially arranged, and the stator 2 is sleeved on the rotor 3. The housing 1 is configured to install the stator 2 and the rotor 3. The stator 2 includes a stator core 201 and a stator winding 202. A part of the stator winding 202 is disposed around the stator core 201, and the other part of the stator winding 202 protrudes from the stator core 201 along an axial direction of the motor. In this application, "along an axial direction of the motor" refers to an extension direction of a motor shaft or an extension direction of an axis of the motor shaft. For example, "along an axial direction of the motor" is an X direction shown in FIG. 2.

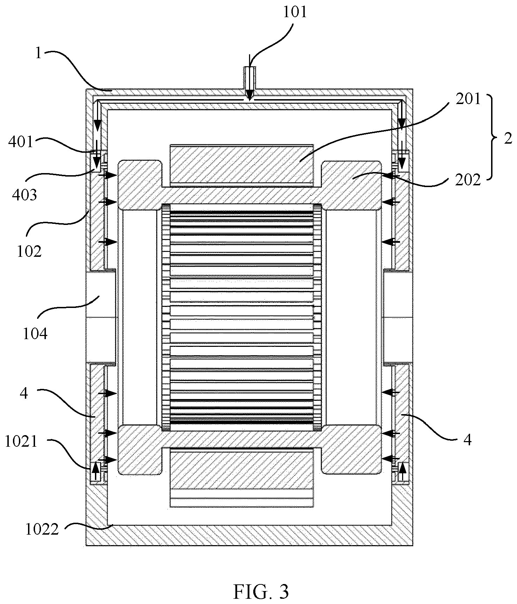

FIG. 3 is a sectional view of a motor according to an embodiment of this application. In this application, a housing 1 includes a bottom wall 1021 and a peripheral side wall 1022, and the bottom wall 1021 is disposed towards a stator 2. As shown in FIG. 3, the housing 1 may have two bottom walls 1021, and the two bottom walls 1021 are disposed opposite to each other. In addition, the peripheral side wall 1022 surrounds the bottom wall 1021, the two bottom walls 1021 and the peripheral side wall 1022 are enclosed to form an accommodating cavity, and the stator 2 and the rotor 3 are accommodated in the accommodating cavity.

Still refer to FIG. 3. The peripheral side wall 1022 includes a liquid injection opening 101, and the liquid injection opening 101 passes through the peripheral side wall 1022 along a radial direction of the motor, so that coolant oil can enter the accommodating cavity of the housing 1 through the liquid injection opening 101. In addition, the motor may further include an end cover 4. The end cover 4 is also disposed in the accommodating cavity of the housing 1, and the stator 2 and the end cover 4 are adjacently arranged along an axial direction of the motor. For example, the end cover 4 is disposed at an end of the stator 2 along the axial direction of the motor.

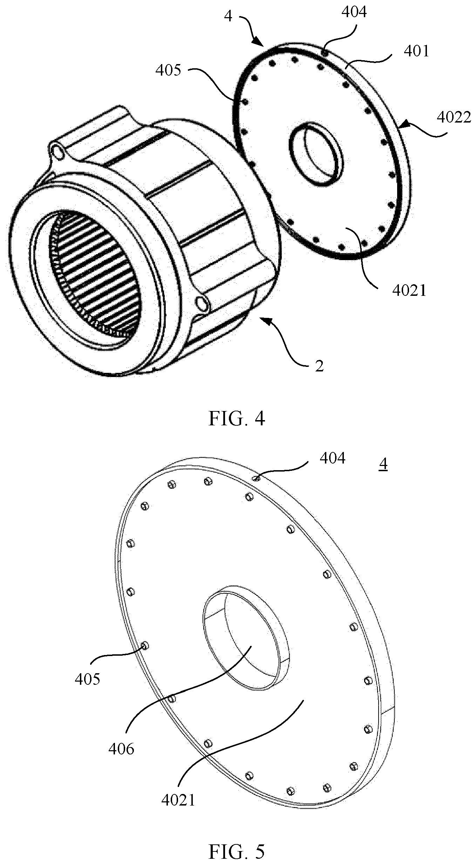

Still refer to FIG. 3. In this application, the end cover 4 may include an outer circumferential surface 401, a side surface, and an internal channel 403. FIG. 4 is a schematic diagram of a partial structure of a motor according to an embodiment of this application. A housing 1 of the motor is omitted in FIG. 4. As shown in FIG. 4, the outer circumferential surface 401 of the end cover 4 includes at least one liquid inlet 404. The liquid injection opening 101 of the housing 1 shown in FIG. 3 may be configured to transmit coolant to the liquid inlet 404, so that the coolant can enter the internal channel 403 of the end cover 4.

In addition, the end cover 4 may include two side surfaces that are oppositely disposed. For ease of differentiation, a side surface that is of the end cover 4 and that faces the stator 2 may be referred to as a first side surface 4021, and the other side surface away from the first side surface 4021 is referred to as a second side surface 4022. Still refer to FIG. 4. The first side surface 4021 of the end cover 4 may include a plurality of liquid outlets 405, and the internal channel 403 of the end cover 4 may be configured to connect the at least one liquid inlet 404 and the plurality of liquid outlets 405. In addition, in this application, the liquid injection opening 101 may be configured to transfer coolant oil to the at least one liquid inlet 404, so that the coolant oil entering the internal channel 403 through the at least one liquid inlet 404 may be sprayed to the stator 2 through the plurality of liquid outlets 405, to cool the stator 2.

In this application, when the end cover 4 is specifically disposed, the end cover 4 may include a first end plate and a second end plate. Along an axial direction of the motor, the first end plate is away from the second end plate, and the first end plate is closer to the stator than the second end plate. FIG. 5 shows a structure of a side of a first end plate of the end cover 4. It may be understood that the first side surface of the end cover 4 is a surface that is of the first end plate 4a and that faces the stator, and the liquid outlet 405 is disposed on the surface that is of the first end plate and that faces the stator.

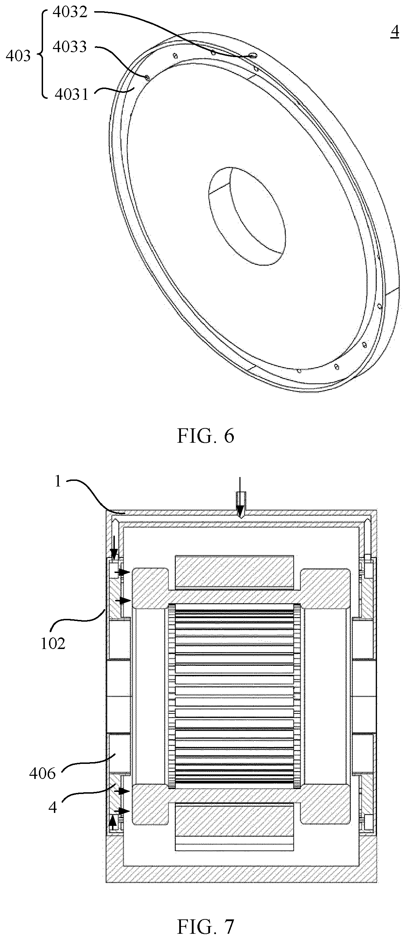

FIG. 6 is a schematic diagram of a structure of a side that is of the first end plate of the end cover 4 and that is away from the stator. The second end plate is omitted in the end cover 4 shown in FIG. 6. In this application, there is a gap between the first end plate and the second end plate. It can be learned from FIG. 6 that the gap between the first end plate and the second end plate may be an annular gap. It can also be learned from the foregoing description of the end cover 4 that the end cover 4 may include the internal channel 403. As shown in FIG. 6, the internal channel 403 includes at least one annular channel 4031, and the annular gap between the first end plate and the second end plate may be used as the annular channel 4031.

As shown in FIG. 3, the housing 1 includes the bottom wall 1021. To simplify the structure of the end cover 4, in this application, the bottom wall 1021 may be used as a second end plate, and a gap may be included between the bottom wall 1021 and the first end plate. For example, the gap may also be an annular gap, and the annular gap may be used as the annular channel 4031.

It may be understood that, to form the annular channel 4031 between the end cover 4 and the bottom wall 1021, the end cover 4 may be fastened to the bottom wall 1021 of the housing 1. During specific implementation, a mounting groove 102 may be disposed on the bottom wall 1021. Still refer to FIG. 3. An opening of the mounting groove 102 is disposed towards the stator 2, the end cover 4 is installed on the mounting groove 102, and the end cover 4 is snap-fitted to the mounting groove 102. In addition, the end cover 4 and the mounting groove 102 may be further fastened and connected. A manner of fastening and connection between the end cover 4 and the mounting groove 102 is not specifically limited in this application. For example, the end cover 4 may be in an interference fit with an inner circumferential surface of the mounting groove 102, so that the end cover 4 is fastened to the mounting groove 102 in an interference fit mode.

The housing 1 includes two bottom walls 1021, and the mounting groove 102 may be disposed on both the two bottom walls 1021. In this way, the end cover 4 may be disposed on each bottom wall 1021, so that cooling efficiency of the stator is improved by spraying coolant oil to two end surfaces of the stator at the same time.

Still refer to FIG. 3. Because the housing 1 includes the liquid injection opening 101, the coolant oil may enter the accommodating cavity of the housing 1 through the liquid injection opening 101. To enable the coolant oil to enter the end cover 4, the internal channel 403 of the end cover 4 may include a radial channel 4032 shown in FIG. 6, and the radial channel 4032 may be configured to connect the liquid inlet 404. In addition, as shown in FIG. 3, a projection of the radial channel 4032 or the liquid outlet 405 along the axial direction of the motor may fall within a range of a projection of the stator winding 202 along the axial direction of the motor, so that the coolant oil sprayed out from the liquid outlet 405 may be sprayed to the end surface of the stator winding 202, to cool the stator winding 202.

In this way, the coolant oil entering the end cover 4 can be sprayed to the stator core 201 and the stator winding 202. Still refer to FIG. 3 to FIG. 6. The internal channel 403 of the end cover 4 may further include an axial channel 4033, and the axial channel 4033 passes through the first end plate of the end cover 4 along the axial direction of the motor. In this application, the internal channel 403 may include a plurality of axial channels 4033, each axial channel 4033 is configured to connect to one liquid outlet 405, and the radial channel 4032 of the internal channel 403 may be connected to the axial channel 4033, so that the coolant oil entering the internal channel 403 of the end cover 4 through the liquid inlet 404 may be sprayed out from the liquid outlet 405 through the axial channel 4033.

In addition, in the motors shown in FIG. 4 and FIG. 5, an opening of the liquid outlet 405 may be disposed towards the axial direction, that is, disposed towards the stator winding 202, so that the coolant oil may be sprayed to the stator winding 202 to cool the stator winding 202.

As shown in FIG. 5, in this application, the liquid outlet 405 may further include an annular protrusion. The annular protrusion may be disposed towards the stator 2, and a spacing between the annular protrusion and an axis of the motor may be less than that between an outer circumferential surface of the stator winding 202 and the axis of the motor, so that the coolant oil can be sprayed to the end surface of the stator winding 202 through the annular protrusion, to cool the end surface of the stator winding 202. In addition, an inner diameter of the annular protrusion may be less than that of the axial channel 4033, so that a size difference between the inner diameter of the axial channel 4033 and the inner diameter of the annular protrusion increases a pressure for the coolant oil to enter the annular protrusion through the axial channel. This helps improve a speed at which the coolant oil is sprayed out from the liquid outlet, and further improves cooling efficiency of the stator.

It should be noted that, in this application, a width of the radial channel 4032 along the axial direction of the motor may be greater than that of the axial channel 4033 along a radial direction of the motor, and a pressure of the coolant oil flowing in the internal channel 403 of the end cover 4 may be increased by changing the cavity widths of the radial channel 4032 and the axial channel 4033. This helps improve a speed at which the coolant oil is sprayed out from the liquid outlet 405, and improves cooling efficiency of the stator 2. In addition, the internal channel 403 of the end cover 4 includes the radial channel 4032 and the axial channel 4033. In this way, the liquid inlet 404 and the liquid outlet 405 are connected through conversion between the radial channel and the axial channel. This can help reduce a size of the end cover 4, and reduce arrangement of external pipelines of the end cover 4. Therefore, a processing process of the end cover 4 is easy to control, and production efficiency of the end cover 4 can be improved.

In the motor provided in this application, when the internal channel 403 of the end cover 4 includes at least one radial channel 4032, an annular channel 4031, and a plurality of axial channels 4033, the at least one radial channel 4032 may be connected to the plurality of axial channels 4033 through the annular channel 4031, and the at least one radial channel 4032 and the plurality of axial channels 4033 may be connected through one annular channel 4031, to achieve effect of one-to-many connection, reduce pipe arrangement in the end cover 4, and further simplify the structure of the end cover 4. In addition, a width of the annular pipe 4031 along the axial direction of the motor may be greater than that of the radial channel 4032 along the radial direction of the motor, and a width of the annular pipe 4031 along the radial direction of the motor may be greater than that of the axial channel 4033 along the radial direction of the motor, so that the pressure of the coolant oil flowing in the internal channel 403 of the end cover 4 is increased by changing the cavity widths of the radial channel 4032, the annular channel 4031, and the axial channel 4033. This helps improve a speed at which the coolant oil is sprayed out from the liquid outlet 405, and further improves cooling efficiency of the stator 2.

Because arrangement of the liquid outlet 405 on the end cover 4 is not affected by another structure, the liquid outlet 405 may be disposed at any location of the end cover 4. For example, in embodiments shown in FIG. 5 and FIG. 6, the liquid outlet 405 may be disposed at a location close to an edge of the end cover 4. In addition, a quantity of liquid outlet 405 is not limited in this application, and may be specifically designed based on a heat dissipation requirement of the motor. For example, as described above, there may be a plurality of liquid outlets 405, and as shown in FIG. 5, the plurality of liquid outlets 405 may be evenly disposed for one circumference, to spray the coolant oil for the stator core 201 and the stator winding 202 in an entire circumferential direction. Therefore, cooling efficiency of the stator 2 is improved to meet a heat dissipation requirement of the motor.

In some other possible embodiments, the plurality of liquid outlets 405 may be disposed close to the liquid inlet 404. For example, when the plurality of liquid outlets 405 are disposed along a circumference direction, the plurality of liquid outlets 405 may be disposed along a three-quarters or four-fifths circumference close to the liquid inlet 404. It may be understood that, in this embodiment, the internal channel 403 of the end cover 4 may be specifically designed according to a layout of the liquid outlet 405. For example, when the plurality of liquid outlets 405 are disposed along a three-fourth circumference close to the liquid inlet 404, the internal channel 403 may include a three-fourth arc cavity disposed close to the liquid inlet 404, to ensure efficiency of spraying the coolant out from the liquid outlet 405. It may be understood that, in the motor provided in this application, when the cooling structure formed by the end cover 4 is disposed at both ends of the stator 2 in the axial direction of the motor, coolant oil may be sprayed at both ends of the stator 2 to cool the stator 2. This can improve cooling efficiency of the stator 2.

Still refer to FIG. 4. In addition to the foregoing structure, the housing 1 may further include a first shaft hole 104. In addition, refer to FIG. 5. The end cover 4 may include a second shaft hole 406, and the first shaft hole 104 and the second shaft hole 406 may be coaxially disposed. In this embodiment, the first shaft hole 104 and the second shaft hole 406 may have a same hole diameter. In this case, rotating shafts around which the stator 2 and the rotor 3 rotate may penetrate the first shaft hole 104 and the second shaft hole 406 at the same time.

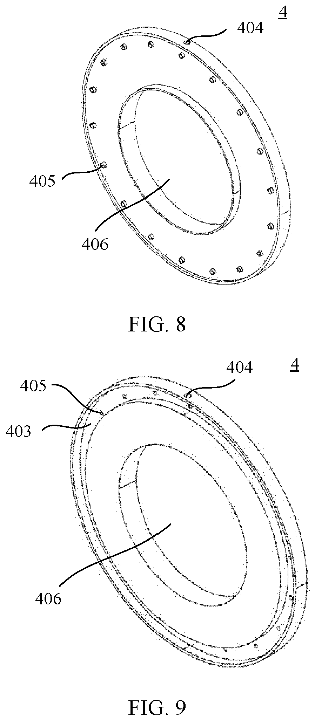

In some motors, a structure such as a reinforcing rib may be disposed on the housing 1. To perform avoidance on the structure, some avoidance structures may be disposed on the end cover 4. For example, FIG. 7 is a sectional view of another motor according to this application. By comparing the motor shown in FIG. 7 with the motor shown in FIG. 4, it may be found that in the motor shown in FIG. 7, a hole diameter of the second shaft hole 406 may be expanded, so that the hole diameter of the second shaft hole 406 is greater than that of the first shaft hole 104. Specifically, FIG. 8 shows a structure of a side that is of the end cover 4 and that faces the stator 2. In addition, FIG. 9 is a schematic diagram of a structure of a side that is the end cover 4 of the motor shown in FIG. 8 and that faces the first mounting groove 102.

It may be understood that, because the internal channel 403 and the liquid outlet 405 may be disposed only at the edge of the end cover 4, expansion of the hole diameter of the second shaft hole 406 does not affect arrangement of the coolant flow channel and the liquid outlet 405. Therefore, the liquid outlet 405 of the motor provided in this application may be disposed based on a specific heat dissipation requirement of the motor, so that heat dissipation effect of the motor can be better. In addition, in the motor shown in FIG. 7 to FIG. 9, except that the second shaft hole 406 is different from the motor shown in FIG. 4 to FIG. 6, other structures may be disposed with reference to the motor shown in FIG. 4 to FIG. 6. Details are not described herein again.

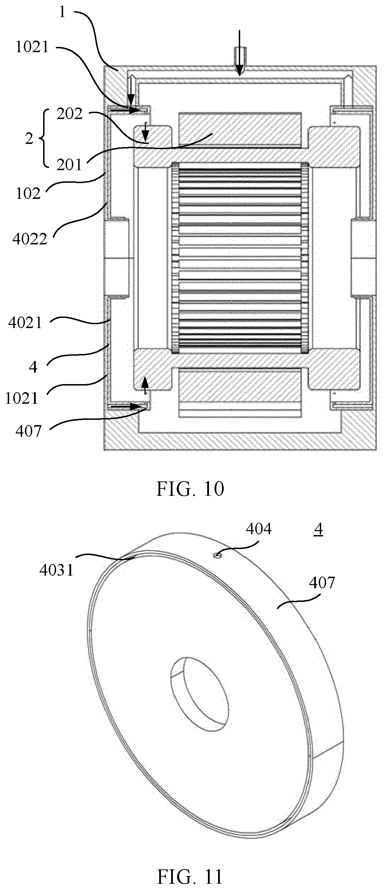

In the motor provided in the foregoing embodiment, an opening of the liquid outlet 405 of the end cover 4 may be disposed along an axial direction. In some other embodiments, the liquid outlet 405 of the end cover 4 may be further disposed in another direction, provided that the coolant oil can be sprayed to the stator core 201 and the stator winding 202 through the liquid outlet 405. During specific implementation, FIG. 10 is a sectional view of another motor according to an embodiment of this application. In this embodiment, the first side surface 4021 of the end cover 4 may include an annular extension part 407, and the annular extension part 407 may extend in a direction towards the stator 2.

In addition, FIG. 11 shows a structure of a side that is of the end cover 4 and that faces the bottom wall 1021. There may be a gap between the inner circumferential surface and the outer circumferential surface of the annular extension part 407, and the gap is an annular gap. In this case, the annular gap may be used as an annular channel 4031. Refer to both FIG. 10 and FIG. 11. A radius of the outer circumferential surface of the annular extension part 407 is less than or equal to an inner diameter of the housing 1, and a radius of the inner circumferential surface of the annular extension part 407 is greater than that of an outer circumferential surface of the stator winding 202 along the radial direction of the motor. In addition, a projection of the radial channel or the inner circumferential surface of the annular extension part 407 along the axial direction of the motor surrounds a projection of the stator winding 202 along the axial direction of the motor, and a distance between an end surface of the annular extension part 407 and the second side surface 4022 of the end cover 4 is greater than that between a side that is of the stator 2 and that faces the end cover 4 and the second side surface 4022 of the end cover 4, so that a structure of the motor is compact.

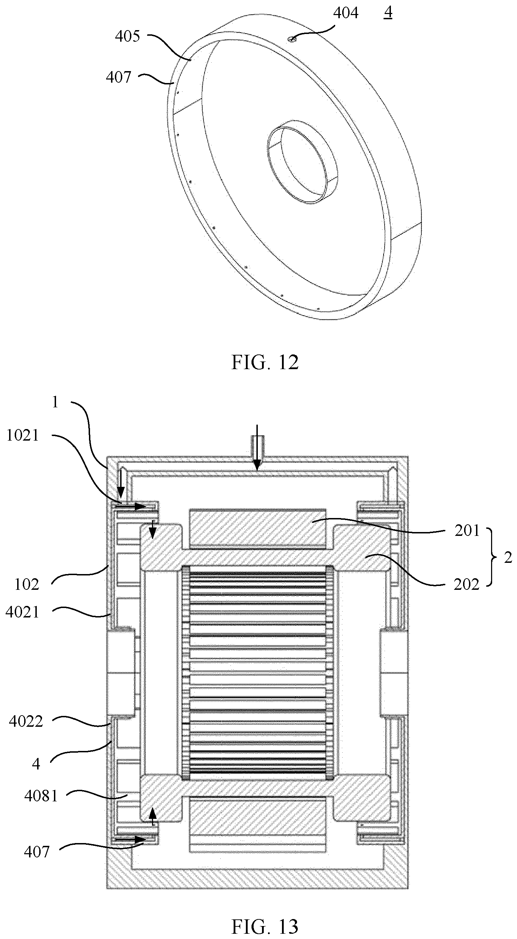

FIG. 12 shows a structure of a side that is of the end cover 4 and that faces the stator 2. To spray coolant oil to the stator winding 202, the inner circumferential surface of the annular extension part 407 may include the liquid outlet 405, and the liquid outlet 405 is connected to the axial channel along the radial direction of the motor. In addition, an inner diameter of the liquid outlet 405 along the axial direction of the motor is less than that of the axial channel along the radial direction of the motor, to increase the pressure of the coolant oil flowing in the internal channel 403 of the end cover 4 by changing cavity widths of the axial channel 4033 and the liquid outlet 405. This helps improve a speed at which the coolant oil is sprayed out from the liquid outlet 405, and further improves cooling efficiency of the stator 2.

It may be understood that an opening of the liquid outlet 405 is disposed towards the radial direction of the motor, so that the coolant oil in the coolant flow channel is sprayed to the end of the stator winding 202 along the radial direction of the motor through the liquid outlet 405, to cool the stator winding 202. In addition, in this application, a distance between the liquid outlet 405 and the second side surface 4022 of the end cover 4 may be greater than that between the side that is of the stator 2 and that faces the end cover 4 and the second side surface of the end cover 4, to increase a coverage area that is of the coolant oil sprayed out from the liquid outlet 405 and that is for the end of the stator 2. This can effectively improve cooling effect of the stator winding 202.

When the pressure of the coolant oil entering the end cover 4 is stable, a smaller volume of the internal channel 403 produces a smaller pressure difference in the direction from the liquid inlet 404 to the liquid outlet 405 in the internal channel 403, and a speed at which the coolant oil is sprayed out from the liquid outlet 405 is faster. Based on this, FIG. 13 is a sectional view of another motor according to an embodiment of this application. In the motor, the coolant oil entering the end cover 4 may alternatively be sprayed to the stator winding 202 along the radial direction of the motor through the liquid outlet 405.

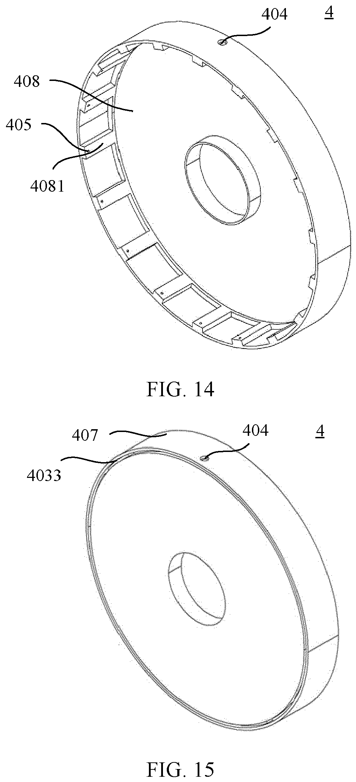

FIG 14 shows a structure of a side that is of the end cover 4 and that faces the stator. Refer to both FIG. 13 and FIG. 14. When the end cover 4 is specifically disposed, the first end plate includes a groove 408, and the groove 408 is recessed towards a side of the second end plate. In this way, a thickness of the end cover 4 along the axial direction of the motor is small. In addition, an inner circumferential surface of the groove 408 may include a plurality of bosses 4081, and each boss 4081 faces an axis of the motor. In this application, an arrangement manner of the plurality of bosses 4081 on the end cover 4 is not limited. For example, the plurality of bosses 4081 may be disposed at intervals along a circumferential direction of the end cover 4.

In this application, the boss 4081 includes a cavity (not shown in FIG. 13), and the cavity of the boss 4081 is used as an axial channel of the internal channel 403 of the end cover 4. In this way, the volume of the internal channel 403 of the end cover 4 can be effectively reduced, to help increase the pressure of the coolant oil flowing in the internal channel 403 of the end cover 4. This can improve a speed at which the coolant oil is sprayed out from the liquid outlet, and further improves cooling efficiency of the stator.

In this application, an end surface that is of each boss 4081 and that faces the axis of the motor may include one liquid outlet 405, so that each liquid outlet 405 is connected to the axial channel. The coolant oil entering the internal channel 403 may be directionally sprayed to the stator winding 202 from each liquid outlet 405 through the axial channel.

In addition, an inner diameter of the liquid outlet 405 along the axial direction of the motor is less than that of the axial channel along the radial direction of the motor, to increase the pressure of the coolant oil flowing in the internal channel of the end cover 4 by changing the cavity widths of the axial channel and the liquid outlet 405. This helps improve a speed at which the coolant oil is sprayed out from the liquid outlet 405, and further improves cooling efficiency of the stator 2.

FIG. 15 shows a structure of a side that is of the end cover 4 and that is away from the stator 2. There is an annular gap between an outer circumferential surface and an inner circumferential surface of the first end plate, and the annular gap may be used as an annular channel 4031. Refer to both FIG. 13 and FIG. 15. A radius of the outer circumferential surface of the first end plate is less than or equal to an inner diameter of the housing 1, and a radius of the inner circumferential surface of the groove 408 is greater than that of the outer circumferential surface of the stator winding 202 along the radial direction of the motor. Alternatively, it may be understood that a projection of the radial channel or the inner circumferential surface of the groove 408 along the axial direction of the motor surrounds a projection of the stator winding 202 along the axial direction of the motor, and a distance between an end surface of the groove 408 and the second side surface 4022 of the end cover 4 is greater than that between a side that is of the stator 2 and that faces the end cover 4 and the second side surface 4022 of the end cover 4, so that a structure of the motor is compact. In the motor provided in the foregoing embodiment of this application, the coolant flow channel is disposed in the end cover 4, and the liquid outlet 405 disposed towards the stator 2 is disposed on the end cover 4, so that the coolant oil can be sprayed to the stator 2 in a full circumferential coverage mode. This can effectively improve cooling efficiency of the stator 2, and improves heat dissipation effect of the motor. Therefore, operating performance of the motor can be improved, and operating performance of the powertrain to which the motor is applied can be improved. In addition, in this application, the cooling structure formed by the end cover 4 is stable, and occupies small space of the housing 1, to reduce interference between the cooling structure and another structure in the housing 1. In this way, the cooling structure can be applied to various types of motors such as a shrink-fitting motor or a lifting-ear motor, and an application scope of the cooling structure is wide.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A motor, comprising a stator, an end cover, and a housing, wherein the housing is configured to install the stator and the end cover, the stator and the end cover are adjacently arranged along an axial direction of the motor, and the end cover comprises an outer circumferential surface, a side surface, and an internal channel;
the outer circumferential surface comprises at least one liquid inlet, and the at least one liquid inlet is configured to receive coolant through the housing;
the side surface faces the stator, and the side surface comprises a plurality of liquid outlets; and
the internal channel is configured to connect the at least one liquid inlet and the plurality of liquid outlets.

2. The motor according to claim 1, wherein the internal channel comprises a radial channel and an axial channel; and
the radial channel is configured to connect the liquid inlet, the axial channel is configured to connect the liquid outlet, and the radial channel is connected to the axial channel.

3. The motor according to claim 2, wherein a width of the radial channel along the axial direction of the motor is greater than that of the axial channel along a radial direction of the motor.

4. The motor according to claim 2 or 3, wherein the axial channel passes through the side surface along the axial direction of the motor, the stator comprises a stator core and a stator winding, and the stator winding is wound around the stator core; and
a projection of the radial channel or the liquid outlet along the axial direction of the motor falls within a range of a projection of the stator winding along the axial direction of the motor.

5. The motor according to any one of claims 2 to 4, wherein the internal channel comprises at least one radial channel, an annular channel, and a plurality of axial channels, and the at least one radial channel is connected to the plurality of axial channels through the annular channel.

6. The motor according to claim 5, wherein a width of the annular channel along the axial direction of the motor is greater than that of the radial channel along the radial direction of the motor, and a width of the annular channel along the radial direction of the motor is greater than that of the axial channel along the radial direction of the motor

7. The motor according to any one of claims 4 to 6, wherein the liquid outlet comprises an annular protrusion, the annular protrusion faces the stator, and the stator comprises the stator core and the stator winding;
an inner diameter of the annular protrusion is less than that of the axial channel; and
along the radial direction of the motor, a spacing between the annular protrusion and an axis of the motor is less than that between an outer circumferential surface of the stator winding and the axis of the motor

8. The motor according to claim 2, wherein the side surface comprises an annular extension part, a radius of an outer circumferential surface of the annular extension part is less than or equal to an inner diameter of the housing, and a radius of an inner circumferential surface of the annular extension part is greater than that of an outer circumferential surface of a stator winding along a radial direction of the motor, or a projection of the radial channel or the inner circumferential surface of the annular extension part along the axial direction of the motor surrounds a projection of the stator winding along the axial direction of the motor, and a distance between an end surface of the annular extension part and the other side surface of the end cover is greater than that between a side that is of the stator and that faces the end cover and the other side surface of the end cover

9. The motor according to claim 8, wherein the inner circumferential surface of the annular extension part comprises the liquid outlet, the liquid outlet is connected to the axial channel along the radial direction of the motor, and an inner diameter of the liquid outlet along the axial direction of the motor is less than that of the axial channel along the radial direction of the motor.

10. The motor according to claim 9, wherein a distance between the liquid outlet and the other side surface of the end cover is greater than that between the side that is of the stator and that faces the end cover and the other side surface of the end cover.

11. The motor according to any one of claims 8 to 10, wherein there is a gap between the inner circumferential surface and the outer circumferential surface of the annular extension part, the gap is used as an annular channel, and the radial channel is connected to the axial channel through the annular channel.

12. The motor according to claim 2, wherein the end cover comprises a first end plate and a second end plate, along the axial direction of the motor, the first end plate is away from the second end plate, the first end plate is closer to the stator than the second end plate, an annular gap is comprised between the first end plate and the second end plate, the annular gap is used as an annular channel, and the radial channel is connected to the axial channel through the annular channel.

13. The motor according to claim 12, wherein the axial channel passes through the first end plate along the axial direction of the motor, the first end plate comprises a groove recessed towards the second end plate, an inner circumferential surface of the groove comprises a plurality of bosses, each boss faces an axis of the motor, each boss comprises a cavity, and the cavity is used as the axial channel.

14. The motor according to any one of claims 12 to 13, wherein the housing comprises a bottom wall and a peripheral side wall;
the bottom wall faces the stator, the bottom wall is used as the second end plate, an annular gap is comprised between the bottom wall and the first end plate, and the annular gap is used as the annular channel; and
the peripheral side wall surrounds the bottom wall, the peripheral side wall comprises a liquid injection opening, the liquid injection opening passes through the peripheral side wall along a radial direction of the motor, and the liquid injection opening is configured to transmit coolant to the liquid inlet.

15. A powertrain, comprising a speed reducer or a gearbox and the motor according to any one of claims 1 to 14, wherein an output shaft of the motor is in a transmission connection toan input shaft of the speed reducer or the gearbox.
